# EUROPEAN PATENT SPECIFICATION

(11) **EP 0 818 863 B1**
(45) Date of publication and mention of the grant of the patent: **13.10.2004**
(21) Application number: 97202119.0
(22) Date of filing: 10.07.1997
(51) Int. Cl.: H02G 3/04, H02G 3/30

(54) **Mounting aid for flexible leads**
Montagehilfe für flexible Drähten
Dispositif d'aide au montage de câbles flexibles

(30) Priority: 10.07.1996 NL 1003553
(43) Date of publication of application: 14.01.1998
(73) Proprietor: B.V. Kunststoffenindustrie Attema, 4200 AB Gorinchem (NL)
(72) Inventor: Verheul, Robert Johan, 2573 LE Den Haag (NL)
(74) Representative: Assendelft, Jacobus H.W.

(56) References cited:
- EP-A- 0 627 802
- CH-A- 525 573
- CH-A- 525 574
- GB-A- 2 285 344
- US-A- 4 953 735

## Description

To mount relatively large numbers of leads, in particular flexible leads, like electricity cables, but signal cables as well, cable gutters and ladder tracks are generally known. From several patents it is known as well, to mount so called splice boxes in variants with gutters, tracks, coupling pieces and mounting plates.

There are no effective mounting aids to mount only a few, e.g. one or two, cables. Either the known cable gutters or ladder tracks need be used, that are comparatively expensive for only a few cables, or each cable must be fixed to the ceiling or wall with the aid of brackets or saddles, in which the brackets or saddles have to be mounted directly to the ceiling or wall one by one in an often clumsy way and with a spacing of e.g. 300 mm, requiring a lot of work, while in the mean time the part of the cable that is not yet fixed with a bracket or saddle, is hanging loose. Mounting with brackets or saddles requires special types of cables with special sheats, making the cable expensive and inconvenient in use. When mounting with brackets or saddles, pre-mounting with cable splice boxes is not applied, such that the required branches in the cable splice box must be made often in inconvenient positions.

Documents GB-A- 2285344 and EP-A-0627802 disclose an energy- or signal guiding system according to the prior art.

The object of the invention is the efficient mounting of one or two or a few leads. For this purpose a system respectively a method according to the enclosed claims 1 respectively 10 are suggested. In a first aspect it has become possible now as well to mount just one or a few leads quickly and reliably and ergonomically favourable. In another aspect it has become possible to take care of a straight mounting of flexible elongated parts, without the requirement of a mounting-guide line, such as indeed necessary when mounting on e.g. brackets. In a further aspect, mounting is possible wherein the number of connecting points with the wall or the ceiling has been restricted. In another aspect a room saving mounting is possible, in particular when taking account of the position and/or accessibility of the branch accessory means or other sockets, e.g. with respect to the surface to which the whole system is mounted. In a next aspect the system is generally applicable to many types of cables (like outer diameter, flexibility, etc.), without the need to keep parts in stock that are adapted to the cable type. In yet another aspect it has become possible for only a few leads as well, to functionally separate the coupling of the leads and branch accessory means (e.g. cable splice boxes) from mounting those two.

Further advantages and aspects of the invention will be understood from the following description of at present advantageous embodiments of the invention, referring to the enclosed drawing, showing in:
Fig. 1 the mounting strip in a first variant in perspective;
Fig. 2 the mounting strip of fig. 1 in side view;
Fig. 3 the mounting strip of fig. 1 in front view;
Fig. 4 a second variant of the mounting strip and supporting brackets in exploded, perspective view;
Fig. 5 a third variant of the mounting strip in front view;
Fig. 6a, b, and c brackets to be used with the variant according to fig. 5;
Fig. 7-12 a fourth-ninth variant of the mounting strip in front view;
Fig. 13-17 alternative embodiments for the manner of connection of the mounting strip according to the invention in front view, wherein the upper part of the mounting strip is merely shown;
Fig. 18-22 alternative embodiments for the lead supporting part on the mounting strip, in front view, wherein the lower part of the mounting strip is merely shown.

In the following description similar reference signs refer to similar parts.

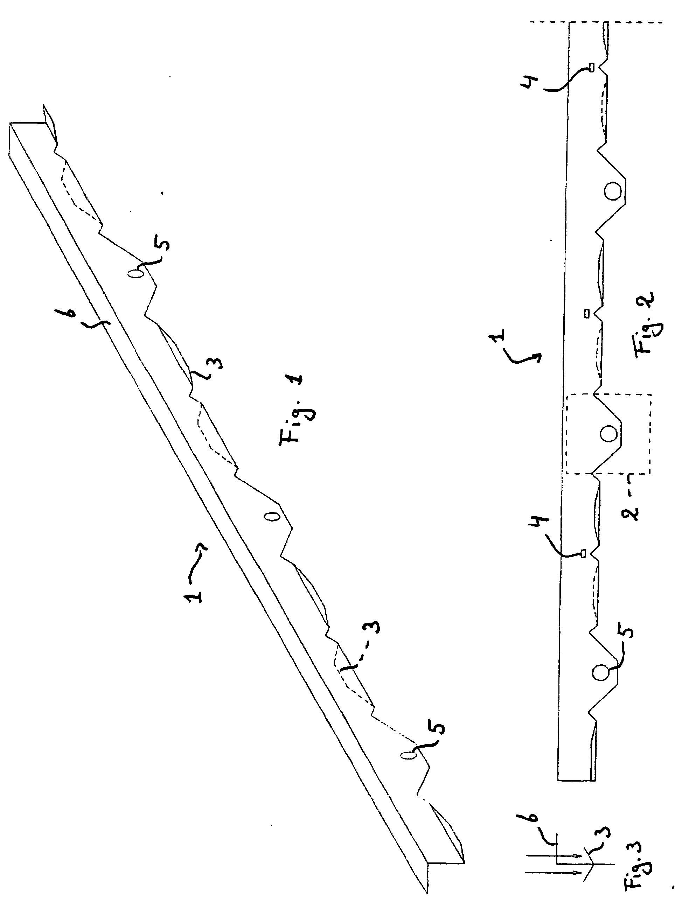

In fig. 1-3 a mounting strip 1 is shown, that can support a few leads. Furthermore, branch accessory means, like cable splice boxes 2, can easily be connected to the mounting strip 1. The mounting aid can, thanks to its flexural stiffness, be mounted to the ceiling or wall with the aid of merely one connecting means (e.g. screw) per e.g. two meters length. A lead is inserted into the branch accessory means and there a branch lead is connected thereto. The branch lead can furthermore extend to another location, e.g. a lamp distant from the mounting strip. The e.g. lamp can be directly connected to the branch accessory means as well. The branch accessory means has e.g. a protective function for connections in or to a lead, or e.g. a connective function for a consumer of the product that is fed by the lead.
the mounting strip can be made cheap from e.g. metal or plastic sheet material, e.g. punched or bend or extruded. at its lower side as shown in the drawing, the strip 1 has alternating projecting lips 3 at both sides. These lips make a preferably acute angle with the web 25 of the strip 1 thereabove, such that a cable (not shown) supported on top of the lip is biassed to the web of the strip 1 with the aid of gravity and there is no risk that the cable can slip from the lip 3 due to shocks or vibrations. Furthermore, to keep the cable appropriately in position, the strip 1 can be provided with holes or slits, like indicated with 4, at convenient locations, for the insertion of cable bind wires (not visible) to wrap them around the cable. In some areas the strip 1 is furtehermore adapted for mounting a cable weld box 2 thereto. The possible position of the cable weld box is shown in phantom in fig. 2. In said area there is preferably no lip 3. In said area the web of the strip 1 can furthermore be provided with a hole 5, for insertion of a quick mount screw (not shown) of the cable weld box 2. For other leads, like a pneumatic lead, a for said application appropriate branch accessory means is used instead of a cable weld box 2. The cable bind wire can e.g. be provided by a lip that is cut from the web 25 and is swiveably connected to said web 25 with the aid of an integral pivot. Said lip (not visible) can e.g. be bend outward with the aid of a screw driver, and as such engage behind the lead.

At the side of the strip 1 opposite the lips 3, there is preferably a flange 6 for mounting to a support, e.g. a wall or ceiling of a building.

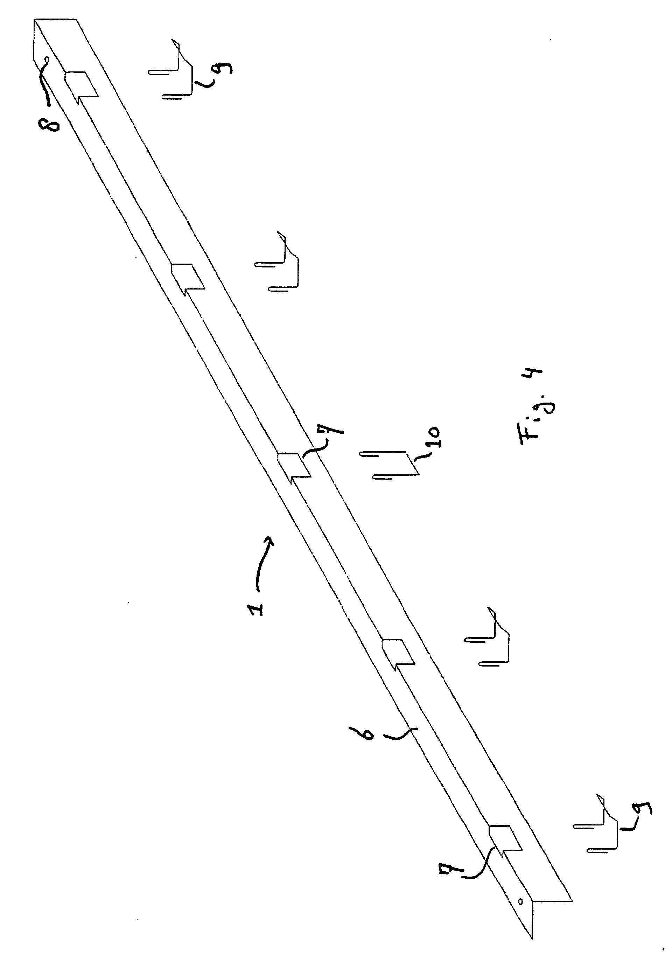

Fig. 4 shows a strip 1 with preferably right angled openings 7, having preferably a regular spacing of e.g. 30 cm. The openings preferably extend into the flange 6, such that the strip 1 can easily be shortened at the position of an opening 7. The strip has a length of e.g. 150 mm. or 200 mm. and has at its longitudinal ends screw holes 8 for connection to e.g. a ceiling. Brackets 9 or 10 can be hooked into the openings 7. Said brackets can advantageously be made of metal wire, possibly covered with plastic. The brackets 9 are adapted for supporting one or more leads, extending parallel to the strip 1. The bracket 10 is adapted for connection of e.g. a splice box thereto, as is more clearly indicated in fig. 5. By making the openings 7 all of the same shape and dimensions, one is free in the selection of the sequence of the brackets 9 and 10.

Fig. 5 shows a variant of the strip 1 according to fig. 4, that can e.g. be extruded from plastic material. The strip 1 now has a flange 6 projecting from both sides, having along its longitudinal edges preferably continuous ribs 14 to give the strip 1 more shape stability. The strip 1 has such ribs 14 at its lower edge as well. A rib 14 projecting from the strip 1 at its lower edge aids in the stabilisation of the required vertical orientation of the bracket 9, 10, 11 on the strip 1 as well. While in the drawings a clear spacing between the adjacent parts of the strip and the brackets 9, 10, 11 is shown, in practice their shapes are mutually adapted such that in the vertical orientation of the web part of the bracket, the hook part and the web part of the bracket bear against the strip 1 such that the bracket is suspended by the strip 1 in a stable manner. With a rib 14 along the lower edge of the strip, the bridge part between the web part and the hook part of the bracket 9, 10, 11 can have a proper dimension to allow convenient shaping of the bracket and convenient suspending thereof into the opening 7. Naturally, such a rib 14 can easily be made with a strip of bend or otherwise deformed, e.g. initially flat, sheet material. When there is no strip 14, stable suspension of a bracket with a large enough bridge part can be realised by e.g. appropriate wall thickness of the strip 1.

The position of a cable splice box 2 is shown in phantom in fig. 5. There it can be seen as well, how the stud 12 projecting from the back of said box 2 is inserted into the bracket 10, and how a fixing means 13, e.g. a nut if the stud 12 is provided with external thread, is provided on said stud 12 at the side of the box 2 opposite the bracket 10.

Fig. 6a and 6b show on a larger scale a slightly different embodiment of the brackets 9, 10 to be used with the strip according to e.g. fig. 4 and 5. Fig. 6c shows a bracket 11 for supporting one or more leads on the mounting strip 1 at a level that is lower then the level that can be provided with the bracket 9. The shape of the brackets can be different from the ones that have been shown here as well, wherein e.g. the hook parts that must engage into the opening 7 extend horizontally instead of vertically, such that in particular under those circumstances a secure connection to the strip 1 can be provided. Instead of bending them from wire material, they can be made as plastic wire shaped or sheet shaped by injection moulding or from e.g. plastic or metal or perhaps paper sheet material as well, and then have e.g. the same shape as circumvented by the wire drawing of fig. 6a-c. The advantage of the production from wire material is o.a. the low weight, porper water (condensation) drain, cheap, convenient finish (no sharp edges, possibility for covering with e.g. soft material), corrosion resistance.

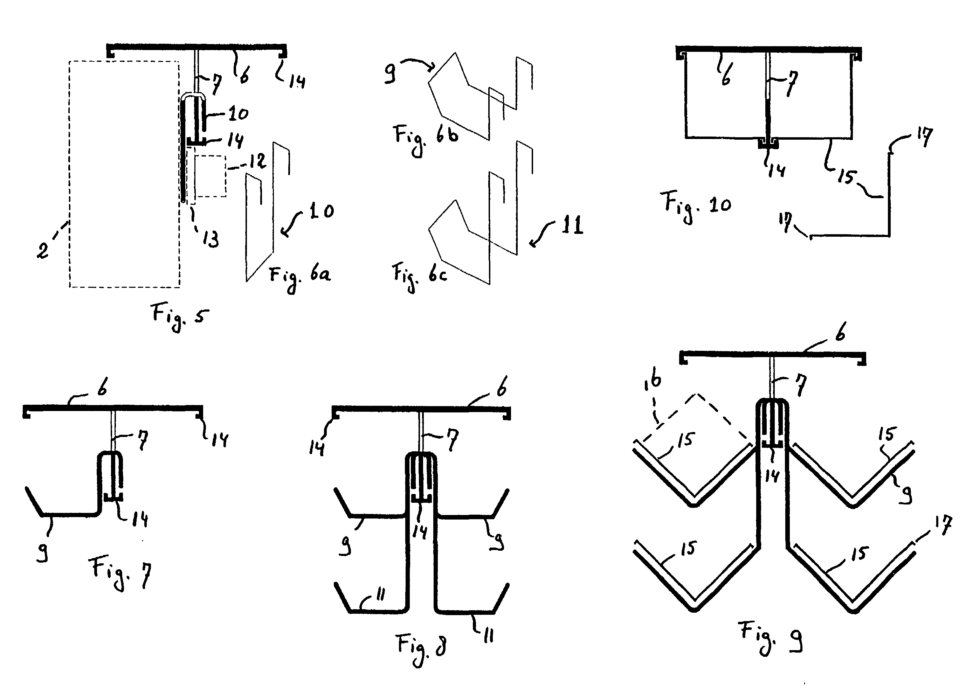

Fig. 7 shows the strip of fig. 5 at another location along its length, where a bracket 9 is suspended in a respective opening 7. Brackets 9 can project from both sides of the strip 1 as well. Fig. 8 shows the use of brackets 9 and 11, and the location of the weld box 2 is shown in phantom. A weld box 2 can be provided for the leads that extend on the opposite side of the strip 1. Fig. 9 shows an alternative for fig. 8, wherein the shape of the supporting parts of the brackets 9, 11 is different, and encasement parts 15 are present. In fig. 9 those encasement parts 15 are shown in an orientation wherein they are e.g. supplied or kept in stock in combination with the respective brackets 9, 11. When the leads have been placed in position, the encasement parts 15 will be provided as is indicated in phantom with the dashed line 16 for one bracket 9, 11. The encasement part therefore has, as shown in fig. 10a, a hook element 17 at both ends, to engage with a hook element (in this embodiment rib 14) at the strip 1 or a hook element at the respective bracket 9, 11 respectively. Fig. 10 also shows an embodiment without using brackets 9 or 11, but merely encasement parts 15. The bracket 10 can e.g. be used for connection of a splice box 2. The advantage of the bracket 10 is that the strip 1 can be kept comparatively low (e.g. material or weight saving at low fabriaction costs), wherein for mounting the box 2 closely below the flange 6, the mounting point 12 of the box to the strip 1 can nevertheless be present below the strip 1.

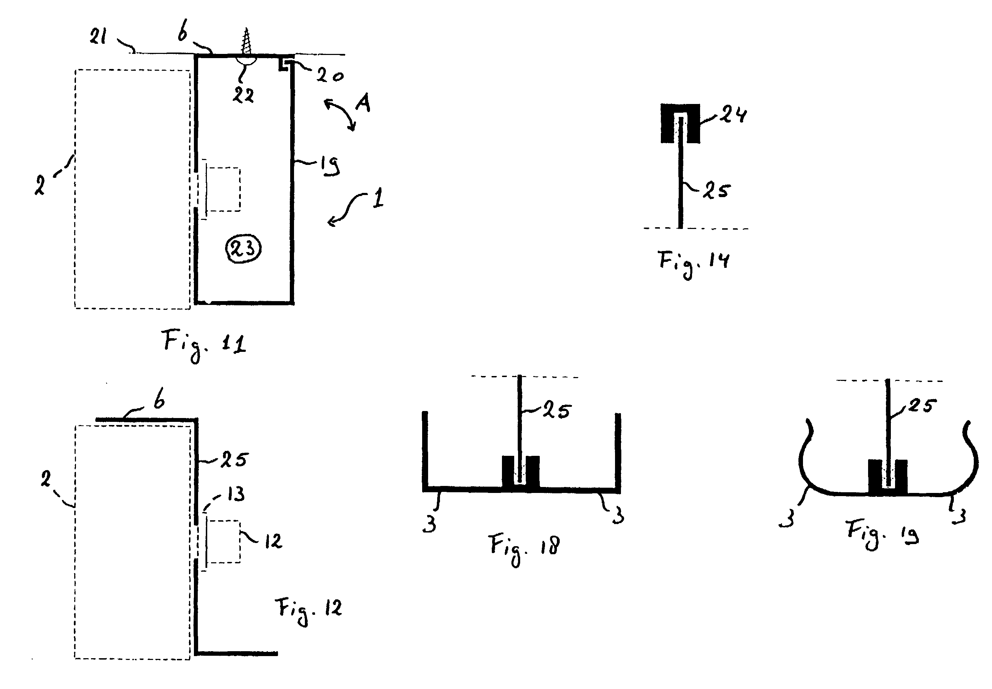

In fig. 11, the strip 1 is provided with an integral ("live") hinge connecting to a swivel part 19 extending along its complete length and swinging in the direction of arrow A, a lip 20 at the free edge of which is detachably engageable with a notch in the rib 14 at the flange 6 of the strip 1 to provide an at least substantially sealed space 23 for one or more leads. In this way the strip 1 can be e.g. extruded from plastic in one piece with the swivel part 19. It is feasible as well to provide the swivel part 19 individually, such that fabrication from e.g. sheet material is made easier. The box 2 is shown in phantom as well, while a ceiling 21 and a ceiling mounting screw are shown. It is not necessary to have a right angled profil for the swivel part 19, but it can be rounded as well. By extending the lip 20, the free edge of the swivel part 19 can e.g. be detachably fixed to the strip 1 far below the flange 6 such that the space 23 can be made smaller by lowering the swivel part 19. The swivel part 19 can also be left out over a part of its length, such that there will be a large number of spaced swivel parts along the length of the strip 1.

Fig. 12 shows a strip 1 as a Z-type profile, such that a support 3 for the leads is merely present at one side of the strip. Since said support 3 is preferably continuous (easy of fabrication), the weld box 2 must be provided at the opposite side (shown in phantom).

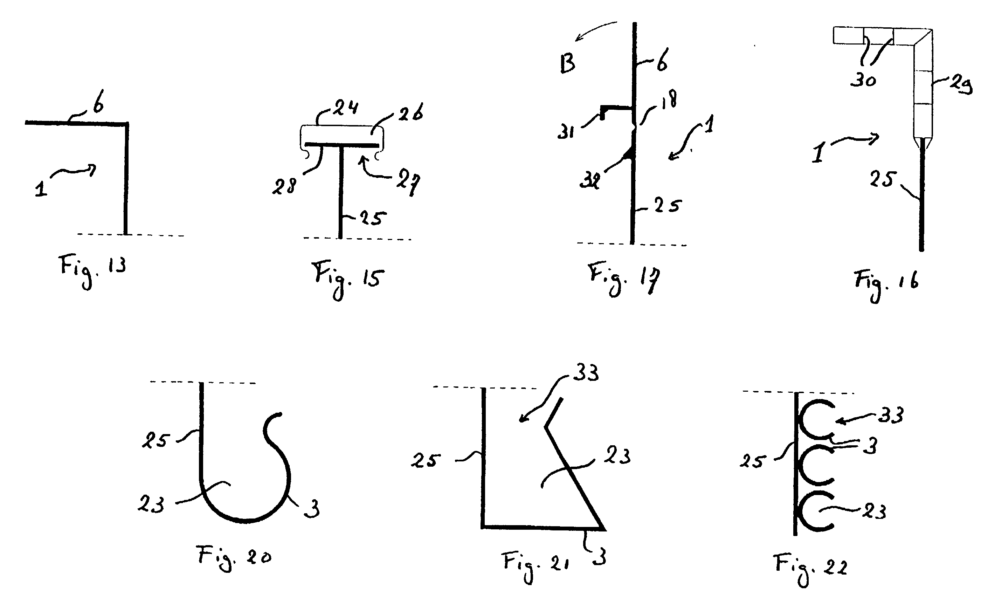

While fig. 13 shows the upper part of the strip 1 of fig. 1, 2 and 12, fig. 14-17 show variations for that part. In fig. 14 a slotted band 24 is first mounted to e.g. the ceiling, followed by insertion of the web 25 of the strip 1 into said slot. Suitable (spring) tongues at the web 25 and/or in the slot of the band 24 keep the web 25 in the slot. In fig. 15 the band 24 is provided with a chamber 26 having a restricted mouth 27 at its lower side such that a web 25 with a hammerhead or double flange 28 of the strip 1 can be fixed therein. The legs of the band 24 can be provided with e.g. spring features. Fig. 16 shows an injection moulded angle profile 29 that is comparatively bending stiff while thin walled due to the presence of intermediate partition walls 13. The web 25 can e.g. be an inmoulded metal or extruded plastic sheet, or can e.g. be mounted in a slot at the profile 29 in accordance with the mounting principle of fig. 14. These embodiments according to fig. 14-16 allow sliding of the web 25 in the longitudinal direction after mounting. The profiles 24 or 29 can be profile pieces as well, of which a large number are provided in the longitudinal direction of the strip 1, e.g. with a spacing of 20 cm.

Fig. 17 shows an embodiment wherein the integral flange 6 is hingedly fixed to the strip 1 via the integral hinge 18. By pivoting in the direction according to arrow B from the indicated position, the lip 31 engages behind the cam 32 such that the flange 6 comes into the position that is shown in fig. 13. This embodiment allows for supplying the strip 1 in a roll, especially when the lip 31 and the cam 32 are small enough.

Fig. 18 and 19 show an embodiment that can be adapted for partly pre-assembly with the leads. The connection principle according to fig. 14 is herewith followed to fix the supports 3 to the web 25 of the strip 1. The supports 3 can be seperate parts extending over the complete length of the strip 1, or they can be length pieces of e.g. 20 mm. length, connected to the web 25 of the strip with a spacing of e.g. 200 mm. Especially in that latter case it is possible, to mount the supports 3 and the splice boxes 2 in their final positions on the leads in advance such that they can be supplied to the mounting area with the leads into e.g. a roll. Other embodiments that are adapted for pre-assembly are feasible, such as on the basis of the brackets 9, 10, 11 or the embodiment according to fig. 14, wherein the web 25 is then provided by relatively short length pieces as well. The cable splice box 2 can be provided with a quick couple system based on the principles of fig. 14 as well, for which reason e.g. an element with a profile according to the profile of the band 24 of fig. 14 is projecting with its slot upwards from the back wall of the box 2.

Fig. 20, 21 and 22 show alternative profile shapes for the supports 3. The enclosed space 23 is in communication with the surroundings via a restriction 33, and said restriction is preferably smaller then the outer diameter of the lead or leads that have to be received by said space, such that they will be retained therein. By making the supports 3 of e.g. fig. 18, 19, 20 or 21 e.g. flexible enough or providing them with a (possibly integral) swivel hinge, and providing the web 25 of the strip 1 with an anchoring element at a suitable position, for anchoring the free longitudinal edge of the support 3 and possibly providing said free longitudinal edge with a profiel that is suitable for anchoring engagement with said anchoring element, such supports 3 can be brought and fixed into a position to surround the lead.

Further shapes for the parts of the mounting strip are possible as well. Embodiments of the mounting strip that are developed by using one or more parts from the one embodiment that is described and/or shown here in the combination with one or more further parts of one or more other embodiments that are described and shown here, belong to the invention as well.

With the invention it is e.g. possible to supply preassembled strips with cables and cable splice boxes, that merely have to be mounted at the building site. The number of steps that have to be performed at e.g. the building site, in particular wherein the workmen must hold their bodies in an inconvenient position, is therefor substantially decreased, it is possible to work safer, more reliable and faster, and the end result depends less from the circumstances at the building site, and is thereby better to check and more attractive compared to the well known direct mounting with saddles or brackets.

The several parts of the system, like web 25, flange 6, support 3 can, depending on the circumstances, extend over the complete length of the system, or e.g. be made from comparatively short length parts having a comparatively large spacing. If a part extends over the complete length of the system, that part will typically be assembled from length pieces that are lengtwise aligned and at least substantially gapless mutually coupled.

Although the above referred to cables or leads for conveyance of electrical power, or a signal (e.g. glass fibre cables), the invention is not restricted thereto. The invention covers other lead types, such as pipes for hydraulics or pneumatics, as well.

## Claims

1. Energy- or signal guiding system with elongated body (1, 24, 25) having along its length and at a mutual spacing:
1) a plurality of supporting means (3, 9, 11), each supporting a respective one or more energy guides extending along said body;
2) one or more mounting elements (22) for the body, connected to a ceiling (21); and
3) at least one connecting accessory (5, 7, 10) between its ends for a branch element (2) to which at least one of the energy guides is coupled for branching off energy to a consumer or source.

2. System according to claim 1, comprising a downwardly extending web element (25) with supporting elements (3, 9, 11) projecting from one or both sides, that are preferably easy to disconnect e.g. by hooking or snapping, with said connection preferably either between the supporting element and the web element or between the web element and a mounting element (6, 24) for said support (21).

3. System according to claim 1 or 2, with the supporting element having an encased design. e.g. by hooking (fig. 10 or 11) or snapping, and possibly with supporting elements at different levels (e.g. fig. 9 or 22).

4. System according to any of the preceeding claims, with at least one of the group: web element (25), mounting element (6, 24), supporting element (3, 9, 11), body (1) made in a length and at least one other of the same group made in length pieces having a mutual spacing that is preferably substantially larger then their length (e.g. fig. 4).

5. System according to any of the preceeding claims, with the mounting element (6) hingedly connected, and preferably adapted to be locked in the position of choice.

6. System according to any of the preceeding claims, with the mounting element (6) projecting sideways and the mounting element preferably as an integral part.

7. System according to any of the preceeding claims, with the connecting accessory for the branch element (2) at the same side of the body as the supporting element.

8. Lead, preferably flexible cable, carrying spaced supporting elements and possibly one or more branch elements along its length, and adapted for use in the system according to any of the preceeding claims, which lead possibly is wound to a roll, and which supporting elements are designed to be mounted to the elongated body of the system of any of claims 1-7.

9. Web element (25) or mounting element (6, 24) or supporting element (3, 9, 11) or body (1) for use in the system according to any of the preceeding claims 1-8.

10. Method for applying an elongated signal or electricity lead, such as a cable, with a branch element (2) for branching off energy or signal to a consumer or source to a ceiling, wherein an elongated integral or assembled body is connected to said ceiling, and support- elements of regular mutual spacing are mounted to said body connected to said ceiling such that said elements are distributed along the length of said body, and thereafter the lead with pre assembled branch elements is connected to said elongated body by said supporting elements, such that said branch element is between the ends of said body.

## Patentansprüche

1. Energie- oder Signalleitersystem mit länglichem Körper (1, 24, 25) mit entlang seine Länge und mit gegenseitigem Zwischenraum:
1) einer Mehrzahl von Unterstützungmitteln (3, 9, 11), jeder eine relevante einen oder mehreren, entlang diesem Körper sich erstreckenden Energieleiter unterstützend;
2) einer oder mehrere Montageelemente (22) für den Körper, an eine Decke (21) montiert; und
3) zumindestens eine Anschlussarmatur (5, 7, 10) zwischen seinen Enden für einer Abzweigelement (2) womit zumindestens einem der Signal- oder Energieleiter verknupft ist zum abzweigen von Energie für einen Verbraucher oder Zuführ.

2. System gemäss Anspruch 1, mit einem abwärts geführten Leibelement (25) mit Unterstützungmitteln (3, 9, 11) von eine oder beide Seiten herausragend, bevorzugt bequem zu lösen, z.B. durch haken oder schnappen, mit diese Verbindung bevorzugt zwischen dem Unterstützungelement und dem Leibelement oder zwischen dem Leibelement und einen Montageelement (6, 24) für dieser Unterstützung (21).

3. System gemäss Anspruch 1 oder 2, wobei der Unterstützungelement umgebend ausgeführt ist, z.B. durch haken (fig. 10 oder 11) oder Schnappen, und eventuell mit Unterstützungelemente auf verschiedene Höhe (z.B. fig. 9 oder 22).

4. System gemäss eine oder mehrere der vorgehenden Ansprüche, mit zumindestens eine der Gruppe: Leibelement (25), Montageelement (16, 24), Unterstützungelement (3, 9, 11), Körper (1) ausgeführt in eine Länge und zumindestens eine andere von dieselbe Gruppe ausgeführt in Längeteilen mit gegenseitigen Abstand bevorzugt wesentlicht grösser wie ihre Länge (z.B. fig. 4).

5. System gemäss eine oder mehrere der vorgehenden Ansprüche, mit dem Montageelement (6) Schwenkbar befestigd und bevorzugt zum Arretieren in die gewählte Position.

6. System gemäss eine oder mehrere der vorgehenden Ansprüche, mit dem Montageelement (6) zum Seite hin herausragend und der Montageelement bevorzugt wie einen integrierten Teil.

7. System gemäss eine oder mehrere der vorgehenden Ansprüche, mit dem Anschlusselement für den Abzweigelement (2) an derselber Seite des Körpers wie den Unterstützungelement.

8. Leiter, bevorzugt biegsames Kabel, beabstandeten Unterstützungelemente tragend und eventuell eine oder mehrere Abzweigelemente entlang seine Länge, und abgestimmt zur Anwendung in dem System gemäss eine oder mehrere der vorgehenden Ansprüche, welche Leiter eventuell aufgewickelt ist zu eine Rolle, und welche Unterstützungselemente abgestimmt sind um zu montieren an dem länglichen Körper des Systems gemäss eine oder mehrere der vorgehenden Ansprüche.

9. Leibelement (25) oder Montageelement (6, 14) oder Unterstützungelement (3, 9, 11) oder Körper (1) zur Anwendung in dem System gemäss eine oder mehrere der vorgehenden Ansprüche 1-8.

10. Verfahren zum Anbringen eines länglichen Signal- oder Elektrizitätleiter, wie einem Kabel, mit einem Abzweigelement (2) zum Abzweigen von Energie oder Signal für einen Verbraucher oder Zuführ, an einer Decke, wobei einen länglichen integrierten oder zusammengefügten Körper verbunden wird mit dieser Decke und Unterstützungelemente mit regelmässige gegenseitige Zwischenraum montiert werden an diesem Körper, verbunden mit dieser Decke, sodass diese Elemente entlang der Länge des Körpers verteilt sind, und danach wird der Leiter mit vormontierten Abzweigelementen verbunden mit diesem länglichen Körper von diesen Unterstützungelementen, sodass dieser Zabzweigelement zwischen den Enden dieses Körpers ist.

## Revendications

1. Système de guider d' énergie ou signal avec corps allongé (1, 24, 25), comprendre longitudinalement et espacé:
1) plusieurs éléments de supporter (3, 9, 11), tous supporter un respective un ou plusieurs guides d' énergie longitudinalement du corps;
2) un ou plusieurs éléments de montage (22) pour le corps, monté à un plafond (21); et
3) au moins un armature de connecter (5, 7, 10) au sein de ses fins pour un élément de déviée (2) avec au moins un des guides d' énergie est connecté pour déviée énergie pour un consommateur ou source.

2. Système selon la revendication 1, comprendre un élément de paroi descendée (25) avec éléments de supporter (3, 9, 11), ensaillie à une ou tous cotés, préférentiellement démontable aisé, par example par accrocher ou enclencher, la montage préférentiellement entre l'élément de supporter et l'élément de paroi ou entre l'élément de paroi et un élément de montage (6, 24) pour le plafond (21).

3. Système selon la revendication 1 ou 2, l'élément de supporter a un exécution enceinte, par example avec accrocher (fig. 10 ou 11) ou enclencher, et eventuellement avec éléments de supporter a plusieurs niveaux (par example fig. 9 ou 22).

4. Système selon l'une quelconque des revendications précédentes, avec au moins une du groupe: élément de paroi (25), élément de montage (6, 24), élément de supporter (3, 9, 11), corps (1) fabriquer en une longue et au moins une autre du groupe fabriquer en parties de longue, espacé préférentiellement substantiellement plus grand que leur longue (par example fig. 4).

5. Système selon l'une quelconque des revendications précédentes, l'élément de montage (6) est monté pivoté et de préférence pourvue pour arreter dans la position désiré.

6. Système selon l'une quelconque des revendications précédentes, l'élément de montage (6) en saillie à là coté et l'élément de montage est de préférence intégré.

7. Système selon l'une quelconque des revendications précédentes, l'armature de connection pour l'élément de déviée (2) est à la coté d'élément de supporter du corps.

8. Guide, de préférence cable avec flexibilité, avec éléments de supporter espacé et eventuellement un ou plusieurs éléments de déviée longitudinalement du guide et pourvue pour usage dans le système selon l'une quelconque des revendications précédentes, le guide est eventuellement bobiné à une bobine, et les éléments de supporter sont pourvue pour montage à le corps allongée du système selon l'une quelconque des revendications précédentes.

9. Élément de paroi (25) ou de montage (6, 24) ou de supporter (3, 9, 11) ou corps (1) pour usage dans le système selon l'une quelconque des revendications 1-8.

10. Procédé pour monter à un plafond un guide de signal ou électricité allongé, par example un cable, avec un élément de déviée (2) pour déviée énergie ou signal pour un consommateur ou source, un corps allongée integré ou assemblée est connecter avec le plafond et éléments de supporter, espacé régulièrement, sont monter à le corps, connecter à le plafond, pour que les éléments sont distribuée le longue du corps, et ensuite le guide avec éléments dévisiée pre-assemblé est connecter avec le corps allongée par les éléments supporter, pour que l'élément dévisiée est entre les fins du corps.
